## Europäisches Patentamt

## European Patent Office

## Office européen des brevets

(19)

(11) Veröffentlichungsnummer: **0 199 829**
**B1**

(12) **EUROPÄISCHE PATENTSCHRIFT**

(45) Veröffentlichungstag der Patentschrift:
**22.03.89**

(51) Int. Cl.⁴: **G 01 C 22/00**

(21) Anmeldenummer: **85103989.1**

(22) Anmeldetag: **02.04.85**

(54) Verfahren und Vorrichtung zur Wegstreckenmessung für landwirtschaftlich genutzte Fahrzeuge.

(43) Veröffentlichungstag der Anmeldung:
**05.11.86 Patentblatt 86/45**

(45) Bekanntmachung des Hinweises auf die Patenterteilung:
**22.03.89 Patentblatt 89/12**

(84) Benannte Vertragsstaaten:
**DE FR GB NL**

(56) Entgegenhaltungen:
**GB-A- 1 192 645**
**US-A- 3 349 616**

(73) Patentinhaber: **Kirchberger, Franz, Lichtenfelser Strasse 43, D-8623 Staffelstein (DE)**

(72) Erfinder: **Kirchberger, Franz, Lichtenfelser Strasse 43, D-8623 Staffelstein (DE)**

(74) Vertreter: **LOUIS, PÖHLAU, LOHRENTZ & SEGETH, Kesslerplatz 1 Postfach 3055, D-8500 Nürnberg (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft ein Verfahren sowie eine Vorrichtung zur Wegstreckenmessung für landwirtschaftlich genutzte Fahrzeuge.

Für die Ausbringung von Kultiviergütern mit einer vorgegebenen Flächenkonzentration aber auch für die Beobachtung des Schlupfanteils bei allen landwirtschaftlichen Arbeiten, für die Registrierung von Ernteerträgen und für die Verrechnung von Lohnarbeiten ist es unerläßlich, fortlaufend während der Arbeit auf der jeweiligen Parzelle die zurückgelegte Wegstrecke und damit auch die bearbeitete Fläche zu messen. In der Regel wird die Wegstreckenmessung mit Hilfe eines auf dem Boden abrollenden Rades gemessen, in dem die Anzahl der Umdrehungen des Rades erfaßt wird (GB-A-1 192 645). Jedoch können derartige Räder, auch wenn sie im Falle von eigens vorgesehenen Asträdern drehmomentfrei und stützlastfrei arbeiten, die wahre Wegstrecke nur sehr ungenau aufnehmen, weil nicht nur Schlupf durch Reibung der Umlauffläche gegenüber dem Boden auftritt, sondern vor allem auch deswegen, weil das Tastrad außer der Fahrtrichtungsstrecke auch die ständigen Auf- und Abbewegungen sowie die Überrollung der vorweglaufenden Spurfurchenbugwelle aus loser Erde in Drehung umsetzt und weil es fortlaufend seinen wirksamen Radius ändert. Die Walkung der Luftbereifung ändert sich und das Tastrad kann in die lockere Erde einsinken. Dann aber ist regelmässig der wirksame Radius kleiner als der nominale Radradius. Der wirksame Radius kann aber auch größer als der nominale Radradius werden, wenn klebrige Erde sich um den Radumfang wickelt. Daher heißt es, daß bei Flächen größer als 1 ha der Landwirt seine Parzelle genauer schätzen als mit Asträdern aufnehmen kann.

Es sind auch bereits Versuche mit berührungslos arbeitenden Wegabtastgeräten unternommen worden, die als Radargeräte, Sonargeräte oder Lasergeräte ausgebildet sind. Abgesehen von dem enorm hohen Bauaufwand solcher Geräte bereiten der wegen der kurzen zu messenden Entfernung gegebene hohe Rauschpegel und die wegen unterschiedlicher Bodenbeschaffenheit (Pflanzenreste und Rückstandsdecken auf der Bodenoberfläche) wechselnden Absorptions- und Reflexionsverhältnisse enorme Schwierigkeiten bei der Wegstreckenerfassung, so daß es äußerst zweifelhaft ist, ob jemals derartige Geräte in der Praxis Eingang finden werden. Sie erfordern vor jedem Einsatz und auch während der Arbeit, wenn sich die bearbeitete Oberfläche ändert, ein umständliches Eichverfahren.

Der Erfindung liegt nun die Aufgabe zugrunde, ein Verfahren und eine Vorrichtung zur Wegstreckenaufnahme für landwirtschaftlich genutzte Fahrzeuge anzugeben, die eine hinreichend genaue Wegstreckenmessung ermöglichen und dennoch einfach ausgestaltet sein sollen, so daß sich der Bauaufwand in Grenzen hält.

Diese Aufgabe wird nach dem erfindungsgemäßen Verfahren dadurch gelöst, daß beim Überfahren des Bodens zuerst eine mechanisch haftende Verbindung zwischen einem Tastorgan und dem Boden für ein vorgegebenes, gegenüber dem Tastorgan zurückzulegendes Wegstreckenintervall hergestellt, nach Zurücklegung des vorgegebenen Wegstreckenintervalls die Verbindung gelöst und verschoben um das vorgegebene Wegstreckenintervall erneut hergestellt sowie die Anzahl der Wiederholungen dieses Vorgangszyklus erfaßt wird.

Es liegt auf der Hand, daß das erfindungsgemäße Verfahren frei von den oben geschilderten Nachteilen des Standes der Technik ist. Probleme mit Radschlupf, Änderungen des wirksamen Radius des Rades, Wegstrecken durch Abfahren von Erhebungen und Vertiefungen an Stelle eines Überfahrens einer geraden Oberfläche und unterschiedlichen Bodenbeschaffenheiten, um nur einige zu nennen, können beim erfindungsgemäßen Verfahren grundsätzlich nicht auftreten. Ihm liegt ein im Vergleich zum Stand der Technik völlig anderes Grundprinzip zugrunde. Es kommt dem Prinzip nahe, nachdem beispielsweise die Länge eines Zimmers mit einem Meterstab ausgemessen wird. Jedoch wurde noch nie daran gedacht, dieses Prinzip in einer angepaßten Form auf die Wegstreckenmessung bei landwirtschaftlichen Fahrzeugen zu übertragen, um die eingangs geschilderten Nachteile zu vermeiden.

Gemäß einer ersten Ausführungsform der Erfindung ist ein Kniehebelmechanismus vorgesehen, bei dem einer der beiden gelenkig miteinander verbundenen Hebel an dem dem Kniegelenk abgewandten Ende innerhalb der Vorrichtung ortsunveränderlich gelagert ist und ein zwischen dem Kniegelenk und dem freien Ende befindliche Punkt des anderen Hebels einen zum ortsunveränderlichen Lagerpunkt des einen Hebels exzentrischen Kreis um den ortsunveränderlichen Lagerpunkt beschreibt und das freie Ende des anderen Hebels in Eingriff mit dem Boden bringbar ist.

Ein derartiger Kniehebelmechanismus ist auch bei landwirtschaftlichen Geräten an sich bekannt und wird als Fördermechanismus für Heu und Stroh verwendet. Ein solcher Kniehebelmechanismus zeichnet sich dadurch aus, daß das nach der Erfindung mit dem Boden in Eingriff kommende Ende des anderen Hebels bei einem Umlauf des Kniehebels seine Winkelstellung im Raum innerhalb eines bestimmten Bereiches nicht ändert. Wird also die Vorrichtung über den Boden fortbewegt, so kommt das Ende des anderen Hebels mit dem Boden in Eingriff, wodurch eine mechanisch haftende Verbindung zwischen diesem als Tastorgan dienenden Ende des anderen Hebels und dem Boden für ein vorgegebenes gegenüber dem Tastorgan zurückzulegendes Wegstreckenintervall hergestellt wird. Nach Zurücklegung des vorgegebenen Wegstreckenintervalls wird die Verbindung automatisch gelöst und kann mit Hilfe eines weiteren Kniehebelmechanismus verschoben um das vorgegebene Wegstreckenintervall erneut hergestellt werden. Dabei kann die Wegstrecke durch Beobachtung der Drehbewegung der Kniehebelmechanismen, also durch die Anzahl der Umdrehungen, erfaßt, oder noch besser durch Kniehebeleingriffe intervallmäßig abgezählt werden.

Wie bereits angedeutet, sind vorzugsweise weitere Kniehebel vorgesehen, bei denen das dem Kniegelenk abgewandte Ende des einen Hebels an dem gleichen Punkt wie das dem Kniegelenk abgewandte Ende des einen Hebels des ersten Kniegelenkes ortsunveränderlich gelagert ist und der zwischen dem Kniegelenk und dem freien Ende des anderen Hebels befindliche Punkt der weiteren Hebel den gleichen Kreis wie der entsprechende Punkt des ersten Kniehebels beschreibt, wobei der gegenseitige Abstand dieser Punkte auf dem Kreis derart gewählt ist, daß bei einer Bewegung der Vorrichtung über den Boden hinweg immer einer der Kniehebel in Eingriff mit dem Boden steht.

Gemäß einer zweiten Ausführungsform der Erfindung ist ein ein Drehorgan umlaufendes und dieses antreibendes Band, Kette oder dgl. vorgesehen, wobei sich das Drehorgan in einem Abstand über dem Boden befindet, während das untere Trum des Bandes auf dem Boden aufliegt. Dieses Band läuft wie bei einem Raupenfahrzeug über den Boden, allerdings mit dem Unterschied, daß das Band lose auf dem Boden aufliegt, da das Drehorgan selbst nicht auf das untere Trum des Bandes drückt. Das Band schiebt also keine Erde vor sich her, so daß Reibung, Schlupf und ein Umwickeln mit Erde ausbleibt. Das Band rollt vielmehr lose auf dem Boden ab, wenn die Vorrichtung über dem Boden bewegt wird, wobei ein Glied bzw. eine Stelle des Bandes als das erwähnte Tastorgan angesehen werden kann, das unter seinem Gewicht mechanisch auf dem Boden haftet für ein vorgegebenes Wegstreckenintervall, bis an dem in Fahrtrichtung hinteren Ende des umlaufenden Bandes diese Stelle nach oben unter Lösung der Verbindung zum Boden und zurück über das Drehorgan hinwegläuft. Beim Lösen dieser Stelle des Bandes vom Boden kommt aber gleichzeitig eine andere Stelle des umlaufenden Bandes in Berührung mit dem Boden und bleibt dort so lange liegen, bis es an das in Fahrtrichtung hintere Ende des umlaufenden Bandes gelangt ist, wenn sich die Vorrichtung über den Boden hinwegbewegt. Die Anzahl der Wiederholungen dieses Vorganges kann durch Messung der Drehbewegung des Drehorgans leicht erfaßt werden. Es könnte aber auch eine die umlaufende Kette berührungslos abtastende Abtasteinrichtung vorgesehen sein.

Vorzugsweise sind zwei hintereinander angeordnete Drehorgane vorgesehen, um die das Band läuft.

Gemäß einer dritten Ausführungsform der Erfindung ist ein über den Boden zu ziehender Bodenanker vorgesehen, ferner eine am Fahrzeug anzubringende und über ein Verbindungselement mit dem Bodenanker verbundene Rückholeinrichtung zum abwechselnden Heranholen des Bodenankers um eine vorgegebene Strecke zwischen Bodenanker und Rückholeinrichtung in der Rückholphase und anschließendem Freigeben des Bodenankers für die gleiche Strecke während der Meßphase sowie eine Zähleinrichtung zum Zählen der Freigabeschritte auf der auszumessenden Strecke.

Hier haftet während der Meßphase der Bodenanker auf dem Boden, wobei die Vorrichtung sich weiterbewegt um die vorgegebene Strecke. Danach wird in möglichst kurzer Zeit der Bodenanker an der Rückholeinrichtung zurückgeholt, worauf er dann wieder auf dem Boden haftet, während sich die Vorrichtung in der vorgegebenen Strecke weiterbewegt. Auf diese Weise kann die Wegstrecke gemessen werden.

Vorzugsweise weist die Rückholeinrichtung eine Spule und einen in der Spule ein- und ausschiebbaren Anker auf, der über das Verbindungselement, beispielsweise ein Seil, mit dem Bodenanker verbunden ist. In einer weiteren Ausbildung dieser Ausführungsform ist eine Steuereinrichtung zum Herausschieben des in die Spule eingeschobenen Spulenankers unmittelbar anschließend an die Rückholphase vorgesehen, wobei das Herausschieben des Spulenankers mit einer die Fortbewegungsgeschwindigkeit der Vorrichtung über den Boden übersteigenden Geschwindigkeit geschieht.

Auf diese Weise wird ähnlich wie beim Ablaufen der umlaufenden Kette gemäß der zweiten Ausführungsform keine Zugbelastung auf den als Tastorgan dienenden Bodenanker in der Meßphase ausgeübt, so daß sichergestellt ist, daß der Bodenanker in der Meßphase ortsunveränderlich auf dem Boden aufgrund eines Gewichtes liegen bleibt.

Vorteilhafterweise umfaßt die Steuereinrichtung zwei auf Abstand hintereinander angeordnete berührungslose Fühler, von denen der erste anspricht, wenn der Bodenanker zurückgeholt ist, und der zweite anspricht, wenn der Bodenanker sich um die vorgegebene Strecke von der Rückholeinrichtung entfernt hat, wobei jeder Fühler anspricht, wenn der Anker darunter wegläuft. Bei festgelegtem Fühlerabstand kann durch Vergleich mit der Zeitspanne zwischen den beiden Fühlersignalen die Geschwindigkeit errechnet werden. Zwischen den Meßphasen und den Rückholphasen muß ausreichend Schlupfzeit eingebaut sein, damit Rückholverzögerungen nicht in die Meßphase eingehen (Meßstrecke 100 bis 200 mm, Meßzeitintervall herunter bis minimal 0,02 sec).

Der erste Fühler löst also das Herausschieben des Spulenankers, während der zweite Fühler das schnelle Zurückholen des Spulenankers auslöst.

In einer abgewandelten Ausführung ist der Bodenanker derart ausgebildet, daß die Haftung des Ankers auf dem Boden mit dem zu messenden Weg mindestens bis zu einem unteren Grenzwert einer den Anker ziehenden Kraft erhalten bleibt und spätestens nach Überschreiten eines oberen Grenzwertes der den Anker ziehenden Kraft aufgehoben ist, weist die Spule mehrere hintereinandergeschaltete Spulenabschnitte auf und ist eine Steuereinrichtung vorgesehen, die in der Rückholphase die Spulenabschnitte in Abhängigkeit von der Eintauchtiefe des Spulenankers nacheinander mit Arbeitsstrom versorgt, sowie eine Meßeinrichtung, die in der Meßphase bei abgeschaltetem Arbeitsstrom die nacheinander in den Spulenabschnitten induzierte Spannung erfaßt. Bei dieser abgewandelten Ausführungsform wird also der Spulenanker durch den am Boden haftenden Anker in der Meßphase auf der Spule herausgezogen, so daß auf dem Bodenanker eine Zugbelastung ausgeübt wird. Diese Abwandlung hat den Vorteil, daß gemäß einer Weiterbildung der Erfindung ein Rechner vorgesehen werden kann zur Berechnung der während der Rückholphase vom Fahrzeug zurückgelegten Wegstrecke aus der Frequenz der in den Spulenabschnitten induzierten Spannung, wobei vorzugsweise auch der erste zeitliche Differenzialquotient dieser Frequenz erfaßt wird. Es läßt sich also hier während der Meßphase nicht nur die Geschwindigkeit des Fahrzeuges, sondern auch die Beschleunigung bestimmen, so daß leicht auf die während der Rückholphase zurückgelegte Wegstrecke geschlossen werden kann. Ein solcher Schluß ist prinzipiell auch bei der Ausführung möglich, bei der keine Zugbelastung auf den Bodenanker in der Meßphase ausgeübt wird, indem man die Zeit mißt, die zwischen dem Ansprechen des ersten und des zweiten Fühlers liegt. Jedoch läßt sich aus der Messung dieser Zeitspanne nicht die Beschleunigung des Fahrzeuges, sondern nur die Geschwindigkeit des Fahrzeuges errechnen, so daß die Hochrechnung auf die während der Rückholphase zurückgelegte Wegstrecke ungenauer ausfällt.

Bei beiden Ausführungen der dritten Ausführungsform ist es zweckmäßig, wenn die Rückholeinrichtung in einem Schar untergebracht ist, das eine Furche in den Boden zieht, in der auch der Bodenanker nachläuft. Dabei sollte bei derjenigen Ausführung, bei der über den haftenden Bodenanker der Spulenanker aus der Spule gezogen wird, der Bodenanker breiter als die von der Schar gezogene Furche sein, um sicherzustellen, daß der Bodenanker auch während der Meßphase haften bleibt. Der Bodenanker kann aber auch aus mehreren hintereinander angeordneten elektromagnetischen Gliedern aufgebaut sein, die bei Beaufschlagung mit Strom sich zu einem starren Gebilde vereinigen und beim Abschalten des Stromes gegeneinander beweglich sind. Auf diese Weise kann für unterschiedliche Haftwerte auf dem Boden während der Rückholphase und der Meßphase gesorgt werden.

Bei den beiden Ausführungen der dritten Ausführungsform ist die Rückholeinrichtung vorzugsweise elastisch am Fahrzeug befestigt, um Bodenunebenheiten leicht ausweichen zu können.

Das erfindungsgemäße Verfahren muß nicht durchgehend auf der ganzen auszumessenden Strecke angewandt werden. Vielmehr wird in einer bevorzugten Ausgestaltung der Erfindung der Wegstrecke in an sich bekannter Weise über ein auf dem Boden abrollendes Rad gemessen und diese Messung mit Hilfe der über eine der Vorrichtungen gemäß der Erfindung gewonnenen Werte korrigiert. Es kann also mit Hilfe der erfindungsgemäßen Vorrichtungen einer Umdrehung des bekannten Tastrades eine Wegstreckenlänge zugeordnet werden und diese Zuordnung in bestimmten Zeitabständen wiederholt werden. Zwischen diesen Zuordnungen wird dann mit dem zuletzt vorhandenen Wert gerechnet. Wenn die erfindungsgemäßen Vorrichtungen nur zu Korrekturen der über das Tastrad gewonnenen Wegstrecke verwendet werden, dann sind kurzzeitige Ausfälle der erfindungsgemäßen Vorrichtung ohne Auswirkung auf das Gesamtergebnis. Mit diesem Verfahren wird also die Messung insgesamt sicherer.

Weitere Vorteile, Merkmale und Einzelheiten der Erfindung ergeben sich aus der nachstehenden, anhand der beiliegenden Zeichnung erfolgenden Beschreibung mehrerer Ausführungsformen. In der Zeichnung stellen dar:

Fig. 1 schematisch einen Kniehebelmechanismus gemäß einer ersten Ausführungsform der Erfindung,

Fig. 2 schematisch einen Wegstreckenaufnehmer mit einer umlaufenden Kette gemäß einer zweiten Ausführungsform der Erfindung,

Fig. 3 schematisch einen mit einem Bodenanker arbeitenden Wegstreckenaufnehmer gemäß einer vierten Ausführungsform der Erfindung,

Fig. 4 schematisch ein bevorzugtes Ausführungsbeispiel eines Bodenankers bei der Ausführungsform gemäß Fig. 3 in Draufsicht, und

Fig. 5 schematisch ein abgewandeltes Ausführungsbeispiel der Ausführungsform gemäß Fig. 3.

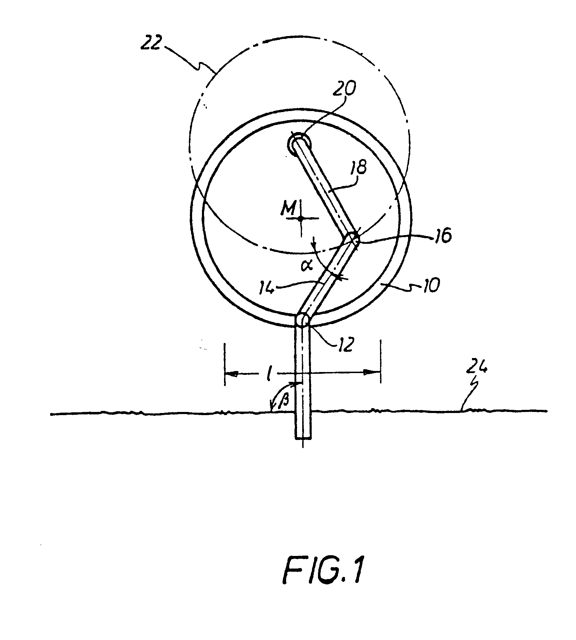

In Fig. 1 ist die erste Ausführungsform der Erfindung schematisch veranschaulicht. Es handelt sich hierbei um einen Kniehebelmechanismus, wie er an sich bei landwirtschaftlichen Geräten im Zusammenhang mit Fördervorrichtungen bekannt ist. Ein derartiger Kniehebelmechanismus hat einen um einen Mittelpunkt M drehbaren Ringkörper 10, an dem bei 12 ein abgewinkelter starrer Hebel 14 genau an der Stelle, an der er abgewinkelt ist, drehbar gelagert ist. Der Hebel 14 ist innerhalb des Ringkörpers 10 wie gezeigt über ein Gelenk 16 mit einem Hebel 18 verbunden, dessen anderes Ende an einer innerhalb des Ringkörpers 16 sich erstreckenden drehbaren Welle 20 befestigt ist. Wie es aus Fig. 1 hervorgeht, liegt die drehbare Welle 20 exzentrisch zum Ringkörper 10. Führt nun der Ringkörper 10 eine Drehbewegung um seinen Mittelpunkt M aus, so beschreibt das Gelenk 16 die Kreisbahn 22. Im unteren Teil der Kreisbahn 22 verläuft diese im Bereich 1 annähernd parallel zum Ringkörper 10 (also der Bahn, die das Drehlager 12 beschreibt), so daß die Winkel $\alpha$ und $\beta$ ($\alpha$ Winkel zwischen Kreisbahn 22 und Hebel 14 im Abschnitt zwischen dem Gelenk 16 und dem Drehlager 12 und $\beta$ Winkel zwischen dem Hebel 14 und einer Horizontalebene) sich in diesem Bereich 1 praktisch nicht ändern. Erst dort, wo der Ringkörper 10 die Kreisbahn 22 schneidet, vollführt der Hebel 14 eine schnelle und große Drehbewegung um das Drehlager 12.

Nach der Erfindung wird nun ein derartiger Kniehebelmechanismus an einem in der Zeichnung nicht dargestellten landwirtschaftlichen Gerät als Wegstreckenaufnehmer befestigt. Wird nun ein derartiger Kniehebelmechanismus über den Erdboden 24 verfahren, so kommt der Hebel 14 mit seinem unteren Ende in Eingriff mit dem Boden 24. Dies erfolgt an einem Ende des Bereiches 1. Bewegt sich das Fahrzeug weiter, so bleibt das in den Boden 24 greifende Ende des Hebels 14 stehen und das Fahrzeug bewegt sich über dieses im Boden stehenbleibende Ende des Hebels 14 hinweg. Dabei treten insbesondere keine Änderungen im Winkel $\alpha$ bzw. Winkel $\beta$ auf. Befindet sich nunmehr das in den Boden 24 greifende Ende des Hebels 14 am andere Ende des Bereiches 1, so löst es sich aus dem Boden. Gleichzeitig kommt das Ende eines weiteren Hebels 14 am anderen Ende des Bereiches 1 in Eingriff mit dem Boden, so daß sich der Vorgang wiederholt und eine lückenlose Wegstreckenaufnahme möglich ist, wobei das in den Boden greifende Ende der Hebel 14 jeweils als Tastorgan dient.

Die anderen Hebel 14 sind am gleichen Drehkörper 10 gelagert und über weitere Hebel 18 mit der gleichen Welle 20 verbunden. Der Abstand ihrer Drehlager 12 ist derart bestimmt, daß, wie es oben angegeben ist, ein Hebel 14 außer Eingriff mit dem Boden gelangt, wenn der andere Hebel 14 in Eingriff mit dem Boden kommt, so daß eine lückenlose Abtastung des Bodens erreicht wird. Die durchlaufende Wegstrecke kann durch die Anzahl der Drehbewegungen des Drehkörpers 10 oder durch Zählen der Anzahl der Eingriffe der Kniehebel in den Boden bestimmt werden.

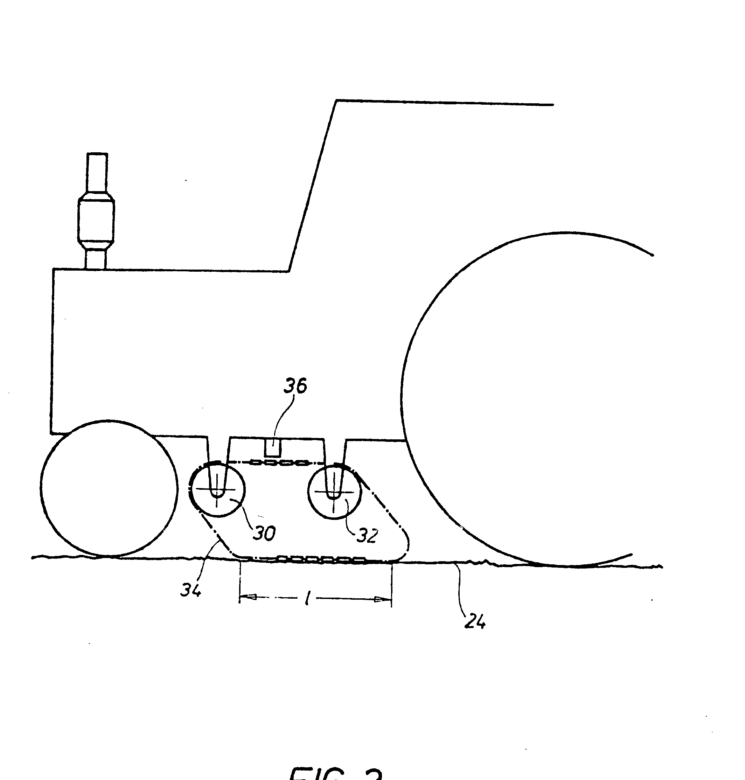

Bei einer zweiten Ausführungsform der Erfindung, die in Fig. 2 gezeigt ist, weist der beispielsweise auf der Unterseite eines Traktors befestigte Wegstreckenaufnehmer eine zwei Drehorgane 30 und 32 umlaufende Kette 34 auf. Die Drehorgane befinden sich in einem Abstand über dem Boden 24, so daß die Kette 34 wie gezeigt lose auf dem Boden aufliegt. Die Drehorgane 30 und 32 sind frei drehbar. Bewegt sich der Traktor vorwärts, so rollt die Kette lose auf dem Boden ab, wobei ein Kettenglied am vorderen **Ende** des in Fig. 2 eingezeichneten Bereiches 1 in Auflage mit dem Boden 24 kommt und dann so lange unter seinem Gewicht mechanisch auf dem Boden haftet, bis nach Durchlaufen der Strecke 1 es am hinteren Ende des Bereiches 1 angelangt ist und nach oben angehoben wird. Auch hier bleibt wie bei der Ausführungsform nach Fig. 1 das untere Ende des Hebels 14 ein Kettenglied beim Durchlaufen eines Wegintervalls 1 völlig unbelastet auf dem Boden liegen bzw. mit diesem in Eingriff, wodurch eine besonders genaue Wegstreckenaufnahme erzielt wird. Auch hier kann man die Anzahl der Drehbewegungen der Drehorgane 30 und/oder 32 oder die Anzahl der an einem berührungslosen Fühler 36 vorbeilaufenden Kettenglieder erfassen, um die zurückgelegte Wegstrecke berechnen zu können.

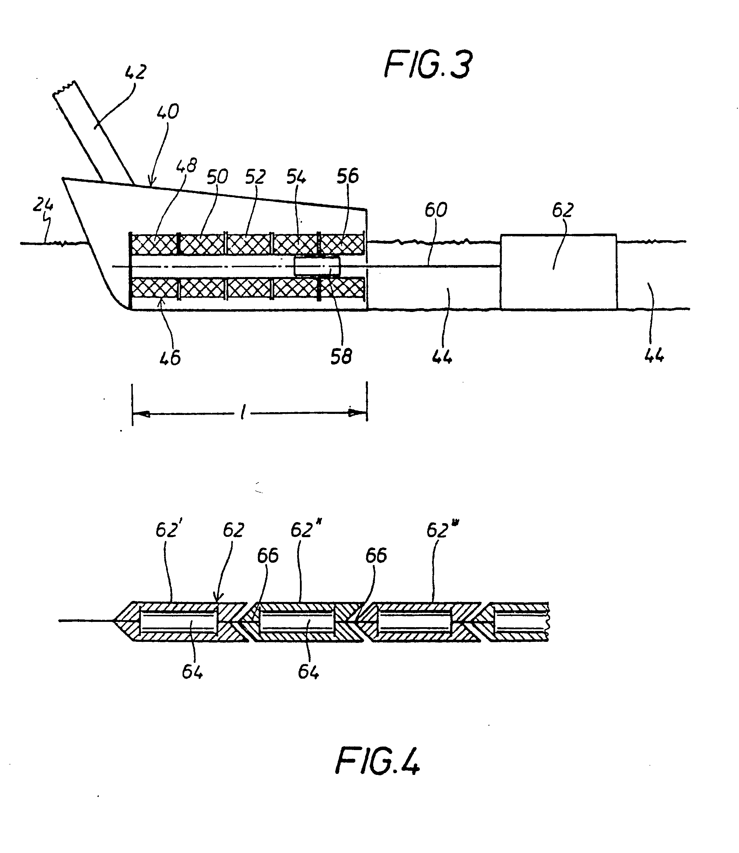

Bei der in Fig. 3 gezeigten dritten Ausführungsform der Erfindung ist ein Schar 40 vorgesehen, das über ein flexibles Element 42 mit dem Fahrzeug verbunden ist. Das Schar 40 zieht im Boden 24 eine Furche 44. Es enthält eine Spulenanordnung 46, die mehrere Spulenabschnitte 48 bis 56 umfaßt. In der Spulenanordnung 46 ist ein Spulenanker 58 verschiebbar gelagert. Der Spulenanker 58 ist über ein Verbindungselement 60, im allgemeinen ein Seil, mit einem Bodenanker 62 verbunden, der in der von dem Schar 40 erzeugten Furche 44 nachgezogen wird. Der Bodenanker 62 kann jede geeignete Form aufweisen. Es sollte ein schwerer Körper sein, der an der Stirnseite eventuell breiter als die Furche ist und/oder auf der Unterseite Stacheln zur Erhöhung der Bodenhaftung aufweist.

Der in der Fig. 3 dargestellte Wegstreckenaufnehmer arbeitet wie folgt:

Angenommen, der Spulenkern 58 befindet sich in der Spulenanordnung 46 in Fahrtrichtung vorne, d.h. in Fig. 3 an linken Ende der Spulenanordnung 46. Nachdem die Spulenanordnung 46 ein Auslösesignal empfangen hat, wird der in der Furche 44 haftende Bodenanker 62 bei einer weiteren Vorwärtsbegung des Fahrzeuges den Spulenanker 58 durch die Spulenanordnung 46 hindurchziehen, wobei er in den einzelnen Spulenabschnitten 48 bis 56 Spannungsimpulse erzeugen wird. Aus der Frequenz dieser Spannungsimpulse kann auf die Geschwindigkeit des Fahrzeuges geschlossen werden. Wird diese Frequenz nach der Zeit differenziert, so kann auch die momentane Beschleunigung des Fahrzeuges ermittelt werden. Ist der Spulenanker 58 an dem in Fahrtrichtung hinteren Ende der Spulenanordnung 46 (in Fig. 3 das rechte Ende) angekommen, so hat er eine bestimmte Wegstrecke 1 relativ zur Schar 40 und damit zum Fahrzeug zurückgelegt. Sobald der Spulenanker an dem in Fahrtrichtung hinteren Ende angekommen ist — wenn also ein Impuls im Spulenabschnitt 56 induziert worden ist —, wird ein Rückholsignal an die Spulenanordnung 46 abgegeben, d.h. die Spulenabschnitte 56, 54, 52, 50 und 48 werden nacheinander (mit Hilfe einer geeigneten, für den Fachmann jederzeit entwerfbaren elektronischen Steuereinrichtung) mit Arbeitsstrom beaufschlagt, so daß der Spulenanker 58 in Fahrtrichtung nach vorne bis zu dem in Fig. 3 linken Ende der Spulenanordnung 46 zurückgeholt wird. Der Spulenanker 58 zieht dabei natürlich auch den Bodenanker 62 mit. Die in dieser Rückholphase zurückgelegte Wegstrekke kann nun mit Hilfe der in der vorangegangenen Meßphase ermittelten Geschwindigkeit und der Beschleunigung des Fahrzeuges leicht hochgerechnet werden. Ist der Spulenanker an dem in Fig. 3 linken Ende der Spulenanordnung angekommen, wiederholt sich das beschriebene Spiel. Durch zählen der «Meßphasenschritte», in denen das Fahrzeug die Strecke 1 zurücklegt und unter Berücksichtigung der in der Rückholphase hochgerechneten Wegstrecke, läßt sich ohne weiteres der zurückgelegte Weg ermitteln.

Da in der Rückholphase des Bodenankers 62 die Reibung des Bodenankers 62 am Boden kleiner als in der Meßphase sein soll, in der der auf dem Boden haftende Bodenanker 62 den Spulenkern 58 durch die Spulenanordnung 56 hindurchziehen muß, wird zur Änderung der Haftungsbedingungen des Bodenankers 62 gemäß Fig. 4 vorgeschlagen, den Bodenanker 62 wie in der Draufsicht in Fig. 4 gezeigt, in mehrere Segmente 62', 62'', 62''' usw. aufzuteilen, die wie dargestellt keilförmig ineinander greifen können und jeweils einen Spulenkörper 64 aufweisen. Diese Spulenkörper 64 sind elektrisch über die die Segmente 62', 62'' usw. verbindenden Kabel in Reihe geschaltet, so daß bei einem Stromfluß durch die Spulenkörper 64 sich die Segmente 62', 62'', 62''' einander anziehen und ein starres Gefüge bilden, während bei Stromabschaltung die Segmente lose miteinander verbunden sind. Auf diese Weise lassen sich unterschiedliche Reibungswerte des Bodenankers erzielen, die sich bei den oben angegebenen Wegstreckenverfahren ausnutzen lassen.

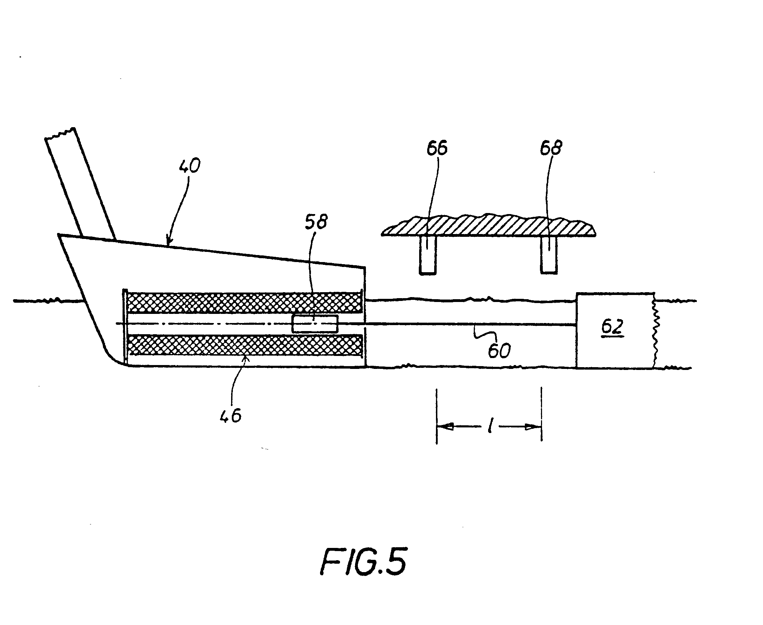

Bei dem in Fig. 5 gezeigten abgewandelten Ausführungsbeispiel der Ausführungsform gemäß Fig. 3 ist in der Schar 40 ein aus einem einzigen Spulenabschnitt bestehender Spulenkörper 46 vorgesehen, in dem der Spulenkern 58 verschiebbar gelagert ist. Hier dient der Spulenkörper 56 nur dazu, den Spulenkern 58 zusammen mit dem Bodenanker 62 in der Rückholphase in Fahrtrichtung nach vorne, also in Fig. 5 den Spulenkern 58 bis zum Anschlag am linken Ende des Spulenkörpers 56, zu bewegen und in der Meßphase, wenn also der Bodenanker 62 auf dem Boden haften soll, in Fahrtrichtung nach hinten, also in Fig. 5 bis zum rechten Ende des Spulenkörpers 46, zu bewegen, und zwar schneller, als es der Fahrgeschwindigkeit entspricht, so daß keine Belastung auf das Zugseil 60 in der Meßphase ausgeübt wird und der Bodenanker 62 daher immer zuverlässig auf dem Boden während der Meßphase liegen bleibt. Gesteuert wird der Strom durch den Spulenkörper 46 in Fig. 5 mit Hilfe zweier auf Abstand befindlicher und berührungslos arbeitender Fühler 66 und 68. Der Fühler 66 erfaßt den Bodenanker 62, wenn dieser zurückgeholt ist, und gibt dann ein Signal ab, aufgrund welches ein Strom durch den Spulenkörper 46 in einer solchen Richtung fließt, daß der Spulenkern vom vorderen Ende der Spule zum hinteren Ende der Spule bewegt wird, und zwar schneller als die Fahrgeschwindigkeit. Auf den Bodenanker 62 wird daher kein Zug ausgeübt, so daß dieser ruhig auf dem Boden liegen bleibt. Wenn der Fühler 68 (die Fahrtrichtung ist in Fig. 5 nach links gerichtet) den Bodenanker 62 überfährt, wird ein Signal abgegeben, aufgrund welches durch den Spulenkörper 46 ein Strom fließt, der dafür sorgt, daß der Spulenkörper 58 nunmehr von dem in Fig. 5 rechten Ende zu dem in Fig. 5 linken Ende des Spulenkörpers 56 verschoben wird, bis der Bodenanker 62 am Fühler 66 vorbeifährt. Das ist die Rückholphase. Dann beginnt das Spiel von neuem.

Aufgrund des Zeitabstandes zwischen den Signalen, die von den Fühlern 66 und 68 abgegeben werden, kann auf die Fahrzeuggeschwindigkeit geschlossen werden, so daß jederzeit auch der in der Rückholphase zurückgelegte Weg abgeschätzt werden kann.

Wie bereits erwähnt, muß eine Wegstreckenmessung mit Hilfe der oben beschriebenen Vorrichtungen nicht über die ganze auszumessende Strecke durchgeführt werden. Vielmehr kann die auszumessende Wegstrecke in an sich bekannter Weise über ein auf dem Boden abrollendes Rad gemessen und diese Messung mit Hilfe der über eine der oben beschriebenen Vorrichtungen gewonnenen Werte korrigiert werden. Es kann also mit Hilfe dieser Vorrichtungen einer Umdrehung eines bekanntes Tastrades eine Wegstreckenlänge zugeordnet werden und diese Zuordnung in bestimmten Zeitabständen wiederholt werden. Zwischen diesen Zuordnungen wird dann mit dem zuletzt vorhandenen Wert gerechnet. Wenn die oben beschriebenen Vorrichtungen nur zu Korrekturen der über das Tastrad gewonnenen Wegstrecke verwendet wird, dann sind kurzzeitige Ausfälle der Vorrichtungen ohne Auswirkungen auf das Gesamtergebnis möglich. Mit diesem Verfahren wird also die Messung insgesamt sicherer.

## Patentansprüche

1. Verfahren zur Wegstreckenmessung für landwirtschaftlich genutzte Fahrzeuge, dadurch gekennzeichnet, daß beim Überfahren des Bodens zuerst eine mechanisch haftende Verbindung zwischem einem Tastorgan und dem Boden für ein vorgegebenes, gegenüber dem Tastorgan zurückzulegendes Wegstreckenintervall hergestellt, nach Zurücklegung des vorgegebenen Wegstreckenintervalls die Verbindung gelöst und mindestens verschoben um das vorgegebene Wegstreckenintervall erneut hergestellt sowie die Anzahl der Wiederholungen dieses Vorgangszyklus erfaßt wird.

2. Vorrichtung zur Durchführung des Verfahrens nach Anspruch 1, dadurch gekennzeichnet, daß ein Kniehebelmechanismus (14, 18) vorgesehen ist, bei dem einer der beiden gelenkig miteinander verbundenen Hebel (18) an dem dem Kniegelenk (16) abgewandten Ende innerhalb der Vorrichtung ortsunveränderlich (bei 20) gelagert ist und ein zwischen dem Kniegelenk (16) und dem freien Ende befindlicher Punkt (bei 12) des anderen Hebels (14) einen zum ortsunveränderlichen Lagerpunkt (20) des einen Hebels (18) exzentrischen Kreis um den ortsunveränderlichen Lagerpunkt (20) beschreibt und das freie Ende des anderen Hebels (14) in Eingriff mit dem Boden (24) bringbar ist.

3. Vorrichtung nach Anspruch 2, dadurch gekennzeichnet, daß weitere Kniehebel vorgesehen sind, bei denen das dem Kniehebel abgewandte Ende des einen Hebels an dem gleichen Punkt wie das dem Kniegelenk abgewandte Ende des einen Hebels des ersten Kniegelenks ortsunveränderlich gelagert ist und der zwischen dem Kniegelenk und dem freien Ende des anderen Hebels befindliche Punkt der weiteren Hebel den gleichen Kreis wie der erste entsprechende Punkt des ersten Kniehebels beschreibt, wobei der gegenseitige Abstand dieser Punkte auf dem Kreis derart gewählt ist, daß bei einer Bewegung der Vorrichtung über den Boden hinweg immer einer der Kniehebel in Eingriff mit dem Boden steht.

4. Vorrichtung zur Durchführung des Verfahrens nach Anspruch 1, dadurch gekennzeichnet, daß ein ein Drehorgan (30) umlaufendes und dieses antreibendes Band (34), Kette oder dgl. vorgesehen ist, wobei sich das Drehorgan (30) in einem Abstand über dem Boden (24) befindet, während das untere Trum des Bandes (34) auf dem Boden aufliegt.

5. Vorrichtung nach Anspruch 4, dadurch gekennzeichnet, daß zwei hintereinander angeordnete Drehorgane (30, 32) vorgesehen sind, um die das Band (34) läuft.

6. Vorrichtung zur Durchführung des Verfahrens nach Anspruch 1, dadurch gekennzeichnet, daß ein über den Boden zu ziehender Bodenanker (62) vorgesehen ist, ferner eine am Fahrzeug anzubringende und über ein Verbindungselement (60) mit dem Bodenanker (62) verbundene Rückholeinrichtung (40) zum abwechselnden Heranholen des Bodenankers (62) um eine vorgegebene Strecke (1) zwischen Bodenanker und Rückholeinrichtung in der Rückholphase und anschließendem Freigeben des Bodenankers (62) für die gleiche Strecke während der Meßphase sowie eine Zähleinrichtung zum Zählen der Freigabeschritte auf der auszumessenden Strecke.

7. Vorrichtung nach Anspruch 6, dadurch gekennzeichnet, daß die Rückholeinrichtung (40) eine Spule (46) und einen in der Spule hin- und herschiebbaren Anker (58) aufweist, der über das Verbindungselement (60), beispielsweise ein Seil, mit dem Bodenanker (62) verbunden ist.

8. Vorrichtung nach Anspruch 7, dadurch gekennzeichnet, daß eine Steuereinrichtung zum Herausschieben des in die Spule (46) eingeschobenen Spulenankers (58) unmittelbar anschließend an die Rückholphase vorgesehen ist, wobei das Herausschieben des Spulenankers mit einer die Fortbewegungsgeschwindigkeit der Vorrichtung über dem Boden übersteigenden Geschwindigkeit geschieht.

9. Vorrichtung nach Anspruch 8, dadurch gekennzeichnet, daß die Steuereinrichtung zwei auf Abstand hintereinander angeordnete berührungslose Fühler (66, 68) aufweist, von denen der erste auf den durchlaufenden Bodenanker anspricht, nachdem er zurückgeholt und wieder haftend mit dem Boden verbunden wurde, und der zweite anspricht, wenn der Bodenanker um die vorgegebene Strecke sich von der Rückholeinrichtung (40) entfernt hat.

10. Vorrichtung nach einem der Ansprüche 6 oder 7, dadurch gekennzeichnet, daß der Bodenanker (62) derart ausgebildet ist, daß die Haftung des Ankers auf dem Boden mit dem zu messenden Weg mindestens bis zu einem unteren Grenzwert einer den Anker ziehenden Kraft erhalten bleibt und spätestens nach Überschreiten eines oberen Grenzwertes der den Anker ziehenden Kraft aufgehoben ist, daß die Spule (46) mehrere hintereinandergeschaltete Spulenabschnitte (48-56) aufweist und daß eine Steuereinrichtung vorgesehen ist, die in der Rückholphase die Spulenabschnitte in Abhängigkeit von der Eintauchtiefe des Spulenankers (58) nacheinander mit Arbeitsstrom versorgt, sowie eine Meßeinrichtung, die in der Meßphase bei abgeschaltetem Arbeitsstrom die nacheinander in den Spulenabschnitten (48-56) induzierte Spannung erfaßt.

11. Vorrichtung nach einem der Ansprüche 6 bis 10, dadurch gekennzeichnet, daß die Rückholeinrichtung (40) in einem Schar untergebracht ist, das den Weg des Bodenankers im Feld furcht oder räumt, in der auch der Bodenanker nachläuft.

12. Vorrichtung nach Anspruch 10 oder 11, dadurch gekennzeichnet, daß der Bodenanker (62) aus mehreren hintereinander angeordneten elektromagnetischen Gliedern (62'-62''') aufgebaut ist, die bei Beaufschlagung mit Strom sich zu einem starren Gebilde vereinigen und bei Abschalten des Stromes gegeneinander beweglich sind.

13. Vorrichtung nach einem der Ansprüche 10 bis 12, dadurch gekennzeichnet, daß die Rückholeinrichtung elastisch am Fahrzeug befestigt ist, um Bodenunebenheiten leicht ausweichen zu können.

14. Verfahren zur Wegstreckenmessung für landwirtschaftlich genutzte Fahrzeuge unter Verwendung einer Vorrichtung nach einem der Ansprüche 2 bis 13, dadurch gekennzeichnet, daß die Wegstrecke in an sich bekannter Weise über ein auf dem Boden abrollendes Rad gemessen und diese Messung mit Hilfe der über eine der Vorrichtungen gemäß den Ansprüchen 2 bis 13 gewonnenen Werte korrigiert wird.

## Claims

1. A method for travel distance measurements for vehicles used for agricultural purposes, characterised in that, on travelling over the ground, there is first established a mechanically adhering connection between a feeler element and the ground for a pre-set length sector to be covered with respect to the feeler element, that the connection is severed after the pre-set length sector has been covered, and that, after displacement by at least the pre-set length sector, it is re-established, and that the number of repetitions of this process cycle is registered.

2. A device for implementing the method according to claim 1, characterised in that provision is made for a toggle lever mechanism (14, 18) wherein the two levers interconnected by a joint is mounted at its end remote from the toggle joint (16) in a fixed location (at 20) within the device, and in that a point of the other lever (14) located (at 12) between the toggle joint (16) and the free end describes a circle eccentric with respect to the fixed mounting point (20) of the one lever (18), around the fixed mounting point (20), and in that the free end of the other lever can be brought to engage with the ground (24).

3. A device according to claim 2, characterised in that provison is made for further toggle levers, wherein the end remote from the toggle joint of the one lever is mounted at a fixed location at the same point as the end remote from the toggle joint of the one lever of the first toggle joint, and the point of the further levers located between the toggle joint and the free end of the other lever describes the same circle as the first corresponding point of the first toggle lever, the mutual distance of these points on the circle being chosen in such a way that, as the device moves over the ground, one of the toggle levers is always engaged with the ground.

4. A device for the implementation of the method according to claim 1, characterised in that provision is made for a belt (34) chain or similar, circulating round a rotating element (30) and driving it, the rotating element (30) being located at a distance above the ground (24), while the bottom side of the belt (34) lies on the ground.

5. A device according to claim 4, characterised in that provision is made for two rotating elements (30, 32) one arranged behind the other, with the beld (34) circulating round them.

6. A device for the implementation of the method according to claim 1, characterised in that provision is made for a ground anchor (62) to be dragged over the ground, moreover for a retrieval device to be fixed to the vehicle and connected to the ground anchor (62), moreover for a retrieval device (40) to be attached to the vehicle and connected to the ground anchor (62) by a connecting element (60) for the alternating retrieval of the ground anchor (62) by a pre-set distance (1) between the ground anchor and the retrieval device in the retrieval stage, and the subsequent release of the ground anchor (62) for the same distance during the measuring stage, as well as for a counting device to count the releasing stages over the distance to be measured.

7. A device according to claim 6, characterised in that the retrieval device (40) has a coil (46) and an armature (58) which can be pushed into the coil and out of it, which is connected to the ground anchor (62) via the connecting element (60), for example, a rope.

8. A device according to claim 7, characterised in that provision is made for a control device for pushing out the coil armature (58) inserted into the coil (46) immediately subsequent to the retrieval stage, the pushing out of the coil armature occurring at a speed exceeding the displacement speed of the device over the ground.

9. A device according to claim 8, characterised in that the control device has two contact-free sensors (6, 68), one disposed behind the other, at a distance whereof the first responds to the passing ground anchor after it has been retreived and has again been reconnected to the ground in an adherent mode, and the — second responds when the ground anchor has moved away from the retrieval device (40) by the pre-set distance.

10. A device according to one of claims 6 or 7, characterised in that the ground anchor (62) is designed in such a way that the adherence of the anchor to the ground over the distance to be measured is maintained at least up to a lower limit of a force pulling the anchor, and that it is cancelled at the latest after an upper limit of the force pulling the anchor has been exceeded, the coil (46) having several successive coil sections (48-56) and that provision is made for a control device which supplies the coil sections in the retrieval stage successively with an operating current depending on the depth of penetration of the coil armature (58), as well as (for) a measurement device which records the voltage successively induced in the coil sections (48, 56) in the measurement stage when the operating current has been switched off.

11. A device according to one of claims 6 to 10, characterised in that the retrieval device (40) is accommodated in a coulter which furrows or clears a path for the ground anchor wherein the ground anchor also follows on.

12. A device according to claim 10 or 11, characterised in that the ground anchor (62) is constructed of several successive electromagnetic elements (62' to 62''') which combine into a rigid formation when supplied with current, and which are movable with respect to each other when the current is switched off.

13. A device according to one of claims 10 to 12, characterised in that the retrieval device is elastically attached to the vehicle, to facilitate the avoidance of irregularities in the ground.

14. A method for the travel distance measurement for vehicles used for agricultural purposes using one of the devices according to one of claims 2 to 13, characterised in that the travel distance is measured in a way known per se with a wheel rolling over the ground, and this measurement is corrected by means of the values obtained with one of the devices according to claims 2 to 13.

## Revendications

1. Procédé de mesure du parcours effectué par des véhicules agricoles, caractérisé en ce qu'on établit d'abord une liaison mécanique, au cours du passage au dessus du sol, entre un élément palpeur et le sol, pour un intervalle de trajet prédéterminé parcouru par l'organe de contact, ladite liaison étant rompue lorsque ce parcours prévu a été accompli, ou au moins suspendue afin qu'un même intervalle de trajet puisse à nouveau être effectué dès lors qu'on enregistre le nombre des répétitions de ce cycle.

2. Dispositif pour la réalisation du procédé de la revendication 1, caractérisé en ce qu'il comprend un mécanisme à leviers coudés (14, 18), dont l'un des deux leviers (18) articulés l'un à l'autre est fixé (en 20), à l'intérieur du dispositif, à l'extrémité opposée à l'articulation (16), en ce que un point situé entre ladite articulation (16) et l'extrémité libre (en 12) de l'autre levier (14) décrit un cercle excentré du point fixe (20) et autour de lui, et en ce que l'extrémité libre de l'autre levier (14) peut s'enfoncer dans le sol (24).

3. Dispositif selon la revendication 2, caractérisé en ce qu'il comprend d'autres leviers coudés, dont les extrémités opposées à l'articulation sont solidarisées au même point que pour la première articulation coudée pour l'un des leviers, alors que les points de autres leviers se trouvant entre ladite articulation et l'extrémité libre, décrivent dans le cas des leviers supplémentaires, le même cercle que le point correspondant du premier levier coudé, avec une position relative sur ledit cercle qui est choisie de telle sorte qu'il y ait toujours un levier coudé dans le sol pendant un mouvement du dispositif.

4. Dispositif pour la réalisation du procédé de la revendication 1, caractérisé en ce qu'il comporte une courroie (34), une chaîne ou équivalent, filant et entraînant un élément rotatif (30), qui se trouve à distance du sol (24) alors que la partie inférieure de la courroie (34) repose sur le sol.

5. Dispositif selon la revendication 4, caractérisé en ce qu'il comporte deux éléments rotatifs (30, 32) placés l'un derrière l'autre, autour desquels tourne la courroie (34).

6. Dispositif pour la réalisation du procédé de la revendication 1, comportant un ancre (62) tiré sur le sol, relié à un dispositif de rappel (40) — rapporté au véhicule — par le biais d'un élément de liaison (60) destiné à mouvoir alternativement l'ancre de sol (62) selon un trajet prédéterminé entre l'ancre au sol (62) et le point de rappel (40), pendant les phases de rappel et de libération contrôlée, pour le même trajet (1), durant la phase de mesure, et comportant en outre un mécanisme de comptage destiné à compter les étapes de libération de l'ancre (62) sur le trajet à mesurer.

7. Dispositif selon la revendication 6, caractérisé en ce que le dispositif de rappel présente un bobinage (46) dans lequel coulisse dans les deux sens un induit (58), qui est relié à l'ancre au sol (62) via un élément de liaison (60), pouvant par exemple être une corde.

8. Dispositif selon la revendication 7, caractérisé en ce qu'il comprend une installation de commande destinée à faire sortir l'induit (58) hors du bobinage (46) et en liaison directe avec la phase de rappel, la vitesse de sortie étant supérieure à la vitesse de progression du dispositif sur le sol.

9. Dispositif selon la revendication 8, caractérisé en ce que l'installation de commande comprend deux tentacules (66, 68) placées l'un derrière l'autre sans se toucher, la première correspondant à la fin de la phase de rappel, l'ancre de sol reposant à nouveau fixe sur le sol, alors que la seconde correspond à la fin du trajet prédéterminé à parcourir à partir du dispositif de rappel (40).

10. Dispositif selon l'une des revendications 6 ou 7, caractérisé en ce que l'ancre au sol (62) est conçu de telle sorte que son maintien sur le sol pendant le trajet prédéterminé est assuré au moins jusqu'à une valeur limite inférieure de la force de traction appliquée à l'ancre et au plus jusqu'à une valeur limite supérieure pour laquelle il doit être supprimé, en ce que la bobine (46) comprend plusieurs secteurs connectés les uns aux autres (48-56), un dispositif de commande étant par ailleurs prévu, qui électrifie les secteurs de bobine l'un après l'autre en fonction de la profondeur d'immersion de l'induit (58) dans la bobine, ainsi qu'un dispositif de mesure qui induit des tensions dans les secteurs de bobine (48-56) pendant la phase de mesure par coupure successive du courant de travail dans ceux-ci.

11. Dispositif selon l'une des revendications 6 à 10, caractérisé en ce que le dispositif de rappel (40) se loge dans un soc, qui creuse un sillon dans le champ pour que l'ancre au sol puisse s'y déplacer.

12. Dispositif selon les revendications 10 ou 11, caractérisé en ce que l'ancre au sol (62) est composé de plusieurs segments électromagnétiques (62'-62''') placés l'un derrière l'autre, qui forment un ensemble rigide lors de l'établissement du courant, et peuvent se mouvoir indépendamment lors de la coupure de courant.

13. Dispositif selon une des revendications 10 à 12, caractérisé en ce que le dispositif de rappel est fixé élastiquement au véhicule, pour absorber facilement les accidents du terrain.

14. Procédé de mesure du parcours effectué par un véhicule agricole utilisant un dispositif selon une des revendications 2 à 13, caractérisé en ce que l'on mesure le trajet d'une façon connue en soi par une roue en rotation sur le sol, cette mesure étant corrigée grâce à la valeur obtenue par le biais d'un des dispositifs des revendications 2 à 13.

FIG.1

FIG. 2

## FIG.3

## FIG.4

FIG.5